# EUROPEAN PATENT SPECIFICATION

(11) **EP 4 222 452 B1**
(45) Date of publication and mention of the grant of the patent: **22.10.2025**
(21) Application number: 20964586.0
(22) Date of filing: 09.12.2020
(51) Int. Cl.: G01C 21/26, E01F 9/00, G08G 1/0967, G08G 1/07, G01C 21/36, G01C 21/34, G08G 1/0968

(54) **NAVIGATION METHOD, NAVIGATION APPARATUS, COLOR INDICATING APPARATUS AND TRANSPORTATION GUIDING APPARATUS**
NAVIGATIONSVERFAHREN, NAVIGATIONSVORRICHTUNG, FARBANZEIGEVORRICHTUNG UND TRANSPORTFÜHRUNGSVORRICHTUNG
PROCÉDÉ DE NAVIGATION, APPAREIL DE NAVIGATION, APPAREIL D'INDICATION DE COULEUR ET APPAREIL DE GUIDAGE DE TRANSPORT

(43) Date of publication of application: 09.08.2023
(73) Proprietor: Telefonaktiebolaget LM Ericsson (publ), 164 83 Stockholm (SE)
(72) Inventor: ZHANG, Ning, Beijing 100102 (CN)
(74) Representative: Ericsson
(86) International application number: PCT/CN2020/134954
(87) International publication number: WO 2022/120644

(56) References cited:
- EP-B1- 1 626 250
- WO-A1-2015/082717
- CN-A- 101 275 849
- CN-A- 109 752 020
- JP-A- 2000 104 230
- JP-A- 2000 221 048
- JP-A- 2000 221 048
- JP-A- 2011 180 088
- US-A1- 2006 267 795
- US-B1- 8 423 431
- AKHIL: "TVS RTR 200 Modified Tail Lamp | WS2812B | FastLED", 4 August 2018 (2018-08-04), XP093288944, Retrieved from the Internet <URL:https://www.youtube.com/watch?v=PZxby4o_kwc>

## Description

### TECHNICAL FIELD

The non-limiting and exemplary embodiments of the present disclosure generally relate to the technical field of internet of vehicles, and specifically to method and apparatus for providing navigation to a vehicle.

### BACKGROUND

This section introduces aspects that may facilitate a better understanding of the disclosure. Accordingly, the statements of this section are to be read in this light and are not to be understood as admissions about what is in the prior art or what is not in the prior art.

Currently, each driver has at least one driving assistant system, from a navigation software installed in a mobile phone or a built-in system in his vehicle, to a drone-boned camera that captures real time traffic information and feedback, or even an autopilot system that can make the driver more relaxed during a trip.

The traffic infrastructure is also evolving, many cities already have intelligent parking system to guide drivers to park distributedly to avoid traffic jam in a certain area. Also, traffic lights as well as tidal lanes can be adjusted automatically according to current and/or forecasted traffic load.

Based on all these advanced technologies, driving is already becoming an activity that has many opportunities or chances to explore the world rather than a time consuming repetitive work, e.g.: by use of navigations, everyone can go to places which he/she has never been to, it would not require any skilled or experienced drivers any more, he/she can simply follow the text/ audio/ animation instructions to visit there.

However, even though there are so many convenience and benefits that those existing solutions bring to us, the driver is still facing below problems:
Operating mobile devices or built-in navigations would be risky while driving. Even though the law prohibits drivers to use mobile devices while driving, when they are encountered traffic congestion, they may be anxious to look at the navigation software UI frequently. The same happens when drivers are driving in an unfamiliar zone.

When there are exits or branched roads, the prompt message might not be accurate enough so that drivers would miss the point. This is rather annoying when driving in a city with complex road network topology.

All these problems listed above are safety risk factors as well as inconvenience issues in traffic activities. Thus, there is still a long way to "Smart Traffic".

Patent application US 2006/267795 A1 discloses a traffic information system, comprising: light source, designed for generating a relative narrow, intense light beam; housing means adapted for being mounted adjacent or above a road surface, accommodating the light source, having a beam exit window for allowing the light beam to exit the housing; a controllable beam deflection system, capable of changing a direction of the light beam towards a projection area on the road surface in order to form a relatively small light spot on the projection area; a control circuit for controlling the controllable beam deflection system such as to effectively make the light spot draw a predefined pattern on the projection area.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Hereinafter, to facilitate easy reading of the specification, "he" is used to represent "he/she", "him" is used to represent "him/her" and "his" is used to represent "his/her".

It is observed by the inventor that drivers need more accurate navigation information to be provided to them without the information being blurred or buried among other information.

For example, when a driver turns to a navigation software in a mobile phone attached to/near a dashboard of a vehicle he is driving or a built-in navigation system of the vehicle or a Head Up Display (HUD) system for navigation, he may be informed that he needs to turn right at the next crossroad in front of him. However, there are two crossroads ahead, one is quite close and the other is not far away, he has to determine which one is the correct one. The driver has to match the navigation information that he is informed of with the real world transportation facilities, such as road signs or traffic lines.

To overcome or mitigate at least one of the above mentioned problems or other problems or provide a useful solution, embodiments of the present disclosure propose a method and an apparatus for providing accurate navigation information to a vehicle.

In a first aspect of the disclosure, there is provided a navigation method for providing navigation to a vehicle according to claim 1.

In an embodiment, the determining a transportation guiding apparatus for guiding the vehicle based on the route and position of the vehicle comprises: selecting one or more transportation guiding apparatuses along the route and within a predetermined distance with respect to the position of the vehicle.

In an embodiment, the one or more transportation guiding apparatuses are integrated to, attached to, adhered to or mounted to one or more transportation facilities.

In an embodiment, the one or more transportation facilities are a sequence of transportation facilities.

In an embodiment, the one or more transportation facilities are one or more road signs or traffic lines.

In an embodiment, the color is determined by at least one of: randomly selection, sequence selection, user input and a color of a group of vehicles including the vehicle.

In an embodiment, the method further comprises: transmitting, a navigation information based on the route and position of the vehicle, to the color indicating apparatus on the vehicle.

In an embodiment, the instruction on color display comprises an indication of the color and when the color should be displayed.

In an embodiment, the method further comprises: determining a line type associated with the vehicle; and transmitting the line type to the color indicating apparatus on the vehicle and the transportation guiding apparatus.

In a second aspect of the disclosure, there is provided navigation apparatus for providing navigation to a vehicle according to claim 10.

In an embodiment, the navigation apparatus comprises at least one of: a server, a navigation device of the vehicle, a driving recorder and a portable device.

In an embodiment, the portable device comprises a wearable device or a smart phone.

In an embodiment, the color indicating device is a taillight of the vehicle.

In an embodiment, the communication interface is further configured for receiving a navigation information based on the route and position of the vehicle and the color indicating device is further configured for displaying the navigation information in the color.

In an embodiment, the communication interface is further configured for receiving a line type associated with the vehicle and the color indicating device is further configured for displaying the navigation information with the line type.

In an embodiment, the instruction on color display comprises an indication of the color and when the color should be displayed.

In an embodiment, the color displaying device comprises at least one of: bulb, Light Emitting Diode (LED) module, Liquid Crystal Display (LCD) module and Organic Light-Emitting Diode (OLED) module.

In an embodiment, the color displaying device has a shape of at least one of: belt, stripe, arrow, rectangle, triangle, straight line, curved line, and dotted line.

In an embodiment, the color displaying device is integrated to, attached to, adhered to or mounted to a transportation facility.

In an embodiment, the transportation facility comprises at least one of: road sign, light barrier and traffic line.

In an embodiment, the transportation facility further comprises a power device for providing power to the transportation guiding apparatus.

In an embodiment, the communication interface is further configured for receiving a line type associated with the vehicle and the color displaying device is further configured for displaying the color with the line type.

In a fifth aspect of the disclosure, there is provided a computer-readable storage medium. The computer-readable storage medium stores instructions which when executed by at least one processor, cause the at least one processor to perform the method according to the first aspect.

With the present invention, a driver can be informed of his own navigation information from transportation facility directly with an enhanced way by color. It is easy for him to identify his dedicated navigation information. Thus, driving is more convenient. Meanwhile, the driver only needs to take a look at the transportation facility rather than a navigation map in a mobile device, it is safer to drive.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1 shows a flowchart of a method according to an embodiment of the present disclosure, which may be performed by a navigation apparatus;
FIG. 2 shows an example of the navigation display according to the present invention;
Fig. 3 is a block diagram of a navigation apparatus, for providing navigation to a vehicle according to embodiments of the present disclosure;
Fig. 4 is a block diagram of a color indicating apparatus on a vehicle, for indicating a color associated with the vehicle according to embodiments of the present disclosure;
Fig. 5 is a block diagram of a transportation guiding apparatus, for guiding a vehicle according to embodiments of the present disclosure; and
Figs. 6-7 show some example illustrations of the color indicating apparatus and the transportation guiding apparatus according to embodiments of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that the terms as used in this document are used only for ease of description and differentiation among nodes, devices or networks etc. With the development of the technology, other terms with the similar/same meanings may also be used.

In the following description and claims, unless defined otherwise, all technical and scientific terms used herein have the same meaning as commonly understood by one of ordinary skills in the art to which this disclosure belongs.

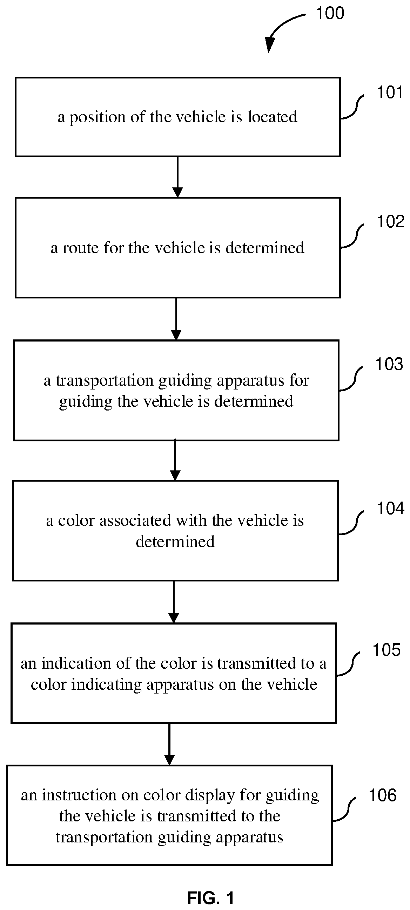

FIG. 1 shows a flowchart of a method 100 according to an embodiment of the present disclosure, which may be performed by a navigation apparatus.

The navigation apparatus may be located on/within the vehicle, such as a navigation device of the vehicle, a driving recorder, a portable device (including but not limited to a wearable device or a smart phone). The navigation apparatus may also be located on cloud, for example the navigation apparatus may be a server. It is understood that the navigation apparatus may be implemented as a sole device or may be implemented in a distributed manner. For example, one or more blocks of the method may be performed by one or more of the above-mentioned devices and the other blocks of the method may be performed by other above-mentioned device(s).

At block 101, a position of the vehicle is located.

In an embodiment, the position is determined by utilizing satellite positioning system, such as Global Positioning System (GPS), GALILEO, GLONASS and COMPASS (BeiDou) or by utilizing cellular network positioning method, or by utilizing Internet of Things (IoT) network positioning method, or by utilizing other positioning system and method capable of locating a vehicle. The navigation apparatus gets the position of the vehicle from block 101.

At block 102, a route for the vehicle is determined based on the position and a destination of the vehicle.

The destination of the vehicle may be input by the driver or a passenger. Alternatively, the navigation apparatus may propose a destination based on user historical data and the destination is confirmed by the driver or the passenger.

The route may be calculated using any navigation method/algorithm. In an embodiment, the calculated route may be several routes and the driver or passenger selects one of the route and may change the route during the trip.

At block 103, a transportation guiding apparatus for guiding the vehicle is determined based on the route and position of the vehicle.

According to the present invention, one or more selected transportation guiding apparatus provides accurate navigation information to the vehicle by showing the navigation information with vehicle-specific color so that the driver can easily identify the navigation information dedicated to him by color.

The transportation guiding apparatus may be integrated to, attached to, adhered to or mounted to a transportation facility. By showing color associated with the vehicle on the transportation facility, the navigation information provided by the transportation facility is enhanced and tailored for the vehicle.

For example, according to the route, the vehicle needs to turn right at a crossroad. The "turn right" sign on a transportation facility such as road sign or traffic line near the crossroad may show purple light from the transportation guiding apparatus on the transportation facility and the color purple is associated with the vehicle. So the driver of the vehicle can easily identify that he should turn right at the crossroad near the transportation facility. Thus, he can obtain accurate navigation information directly from the transportation facility without having to match the navigation information in virtual world (for example, in navigation software) to the real world (i.e., crossroad, road sign or traffic line) because the navigation information is provided in the real world and is specific to the driver.

In an embodiment, transportation guiding apparatuses that are integrated to, attached to, adhered to or mounted to a sequence of transportation facilities (such as light barriers in the isolation zone of highway) may show the color associated with the vehicle in a sequence. Thus, the sequence of color display gives the driver a feeling of company. With the sequence of color being displayed along the road, the driver is informed that he should go directly without turning or exiting. With the sequence fading or shortened, the driver is informed that he should turn or exit, no more go directly.

The transportation facility may include road sign, light barrier, traffic line and/or other transportation facilities suitable for providing guiding information or other transportation facilities suitable to be mounted with the transportation guiding apparatus. The transportation guiding apparatus may enhance the navigation information originally provided by the transportation facility by adding color or may provide the navigation information by itself with color.

The transportation guiding apparatus may include one or more color displaying devices that can emit color light, for example, bulb, Light Emitting Diode (LED) module, Liquid Crystal Display (LCD) module, Organic Light-Emitting Diode (OLED) module and so on. The color displaying device may emit light of a single color or the color displaying device may be capable of showing multiple colors simultaneously or alternatively. The color displaying devices may have a shape of at least one of: belt, stripe, arrow, rectangle, triangle, straight line, curved line, dotted line, and so on or their combinations. Alternatively, the one or more color displaying devices are arranged to form a shape of at least one of: belt, stripe, arrow, rectangle, triangle, straight line, curved line, dotted line, and so on, or their combinations. The transportation guiding apparatus may also include a communication interface configured for receiving an instruction on color display for guiding the vehicle from a navigation apparatus so that the color displaying device displays a color associated with the vehicle accordingly.

In an embodiment, one or more transportation guiding apparatuses along the route and within a predetermined distance with respect to the position of the vehicle is selected. The predetermined distance may be set by those skilled in the art according to requirements for guiding.

At block 104, a color associated with the vehicle is determined.

The color may be selected from a set of predetermined color suitable for enhancing the navigation information display. For example, the set of predetermined color may not include colors that may cause confusion, such as red, yellow and green that are already used in traffic lights. The set of predetermined color may be distinguishable from each other so that when multiple colors are displayed on one transportation facility, they can be easily distinguished and identified. The set of predetermined color may be relatively easy to see clearly in dark environment or bad weather. Examples of predetermined color may include purple, pink, gray, white, brown and so on.

The color may be randomly selected from the set. Alternatively, the color may be selected one by one from the set in a sequence manner. Or, the color may be selected by user input from the set. Or, the vehicle belongs to a group of vehicles. The color associated with the group is firstly selected, then each vehicle belonging to the group shares the same color.

At block 105, an indication of the color is transmitted to a color indicating apparatus on the vehicle.

The color indicating apparatus comprises: a communication interface configured for receiving an indication of the color from a navigation apparatus; and a color indicating device configured for indicating the color in accordance with the indication.

A color indicating device is located within line of sight of a driver of the vehicle.

Thus, the color indicating apparatus may indicate the color to the driver so that the driver of the vehicle gets to know which color is associated with the vehicle and he may pay attention to the color display on the transportation facility.

Since the driver only needs to memorize his specific color, he doesn't need to continue to monitor the color indicating apparatus. Thus, he only needs to focus his attention to the navigation information shown on transportation facility, rather than looking at a navigation map in a mobile phone from time to time, or frequently. Thus, it is safer to drive.

A color indicating device is located on the rear end of the vehicle and indicates the color to another driver in another vehicle. For example, the color indicating device may be a bulb on the rear end or a taillight of the vehicle.

In this way, the color indicating apparatus may indicate the color to another driver in another vehicle, for example, the other vehicle (the second vehicle) behind the vehicle (the first vehicle). The other driver may get to know the intention of the first vehicle from the transportation facility just as the first driver does and may adjust his driving accordingly.

In an embodiment, the indication of the color indicates the color associated with the vehicle.

In another embodiment, the method further comprises transmitting, a navigation information based on the route and position of the vehicle, to the color indicating apparatus on the vehicle. The navigation information may include to turn right, to turn left, to go directly, and so on. The color indicating apparatus may receive the navigation information and display the navigation information in the associated color. As such, the driver can also get to know the colored navigation information (for example, a turn right arrow in purple) from the color indicating apparatus inside the vehicle (for example, on a windshield). This is useful when two vehicles share the same color and their navigation information is different on the same traffic facility. The driver may refer to the navigation information within his own vehicle from the color indicating apparatus.

In a further embodiment, the method further comprises determining a line type associated with the vehicle; and transmitting the line type to the color indicating apparatus on the vehicle and the transportation guiding apparatus. The line type may include at least one of: solid line, dashed line, dotted line, hollow line, empty line and other line type that can be distinguishable from each other.

The line type may be randomly selected. Alternatively, the line type may be selected one by one in a sequence manner. Or, the line type may be selected by user input. Or, the vehicle belongs to a group of vehicles. The line type associated with the group is firstly selected, then each vehicle belonging to the group shares the same line type.

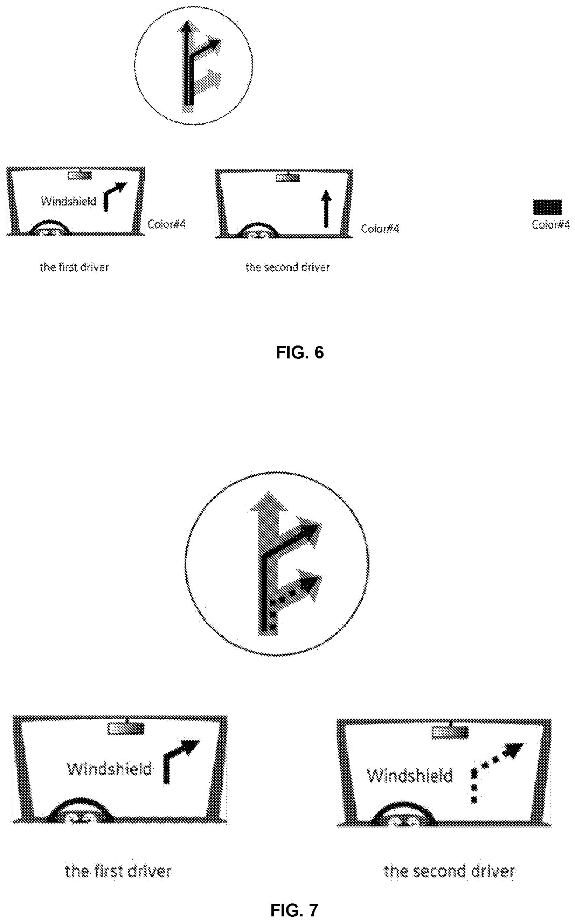

The color indicating apparatus and the transportation guiding apparatus may receive the line type and display with the line type. See fig. 7, the first vehicle and the second vehicle are associated with different line types. Thus, the drivers can easily identify the respective navigation information for him, even though the navigation information for the two vehicles are similar (i.e., both to turn right) and displayed on the same transportation facility in the same color.

At block 106, an instruction on color display for guiding the vehicle is transmitted to the transportation guiding apparatus.

The instruction on color display may comprise an indication of the color and when the color should be displayed. The instruction is specific to the vehicle. The transportation guiding apparatus may therefore display corresponding color on transportation facility to enhance the navigation information for the vehicle so that the driver of the vehicle or the second driver of the second vehicle can easily identify the navigation information by color.

The time period during which the color is displayed may correspond to the time period that the driver needs to be informed of navigation information, for example, when the vehicle is within a predetermined distance to the transportation facility or the crossroad or the exit.

The time when color disappears after the time period of color displaying may also provide information to the driver. For example, in the above mentioned "company" scenario, when the accompanying color display sequence begins to disappear or shorten, the driver is informed that he may prepare for a turn, no more going directly and he may turn his head to take a look at the road sign which may show a turn right arrow in associated color.

The time when the color is displayed may be successive or intermittent. In the latter case, the color may be displayed in a flashing/ twinkle manner.

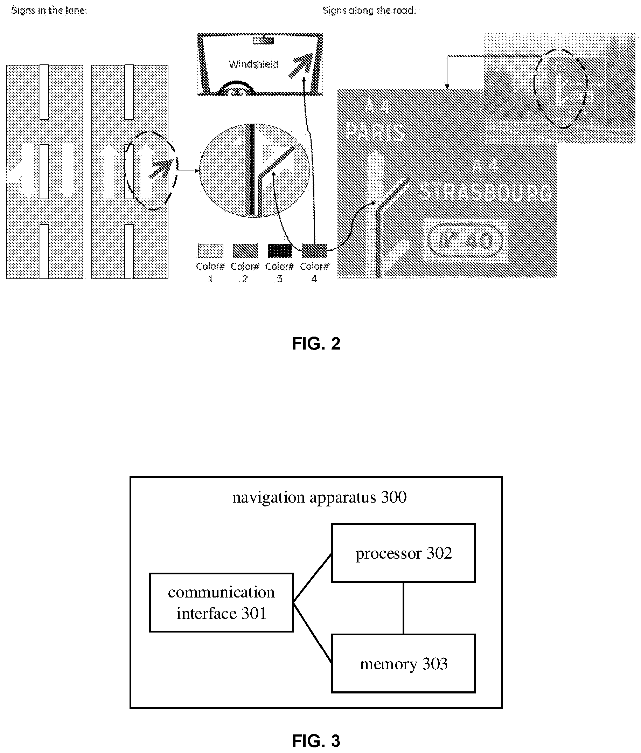

FIG. 2 shows an example of the navigation display according to the present invention.

Assume a driver needs to turn right at the second exit ahead according to route and position of his vehicle. A road sign by the road include one direct arrow and two turn right arrow. With the present invention, the transportation guiding apparatus may enhance the upper turn right arrow by displaying color#4 which is associated with the vehicle and the color is indicated to the driver within his vehicle by color indicating apparatus (a tiny bulb emitting color#4 not shown in the figure or a turn right arrow in color#4 on the windshield). The taillight of the vehicle may also be a color indicating apparatus and show color#4 so that other drivers can get to know the driver will turn right and exit at the second exit. A traffic line as shown also shows turn right arrow in color#4 to guide the vehicle to follow the rightmost lane and get ready to turn right.

In this way, the driver of the first vehicle can get to know his vehicle is associated with the color#4 from the color indicating apparatus in the first vehicle, for example a bulb on the windshield. Other drivers can get to know the first vehicle is associated with the color#4 from the color indicating apparatus on the first vehicle, for example, a bulb on the rear window. The driver of the first vehicle and other drivers can easily get to know the first vehicle will turn right at the second exit ahead from the road sign or from the traffic line, because the dedicated navigation information for the first vehicle is displayed in color#4.

The first driver can also get to know this navigation information from the color indicating apparatus within his vehicle, for example, a turn right arrow with color#4 (the color indicating apparatus has a shape of arrow and can emit color light). This is convenient for the driver since it further enhance the navigation information by showing it twice (on the windshield and on the road sign), the driver can double check or cross check the navigation information between the two. It is also useful when two vehicles happen to be associated with a same color (for example, color#4) and have different navigation information (for example, one is to go directly and the other one is to turn right) displayed on a same transportation facility, for example, a same road sign. See fig. 6, if the color indicating apparatus within a vehicle only shows the associated color, the first driver and the second driver sharing the same associated color cannot determine which navigation information shown on the same transportation facility is for him. According to the embodiment, the color indicating apparatus within vehicle can also show the navigation information for the vehicle, so the first driver and the second driver can both determine he should follow the navigation information shown within his vehicle. For example, the first driver can determine that he should follow the turn right arrow shown on his windshield. The color display on the transportation facility can still indicate to the first driver that the turn right arrow at the second exit shown on the road sign (instead of the first exit) is for him.

Fig. 3 is a block diagram of a navigation apparatus, for providing navigation to a vehicle according to embodiments of the present disclosure.

The navigation apparatus 300 includes a communication interface 301, a processor 302 and a memory 303. The memory 303 contains instructions executable by the processor 302 whereby the navigation apparatus 300 is operative to perform the actions, e.g., of the procedure described earlier in conjunction with Fig. 1.

In some embodiments, the memory 303 may further contain instructions executable by the processor 302 whereby the navigation apparatus 300 is operative to perform any of the aforementioned methods, steps, and processes.

In an embodiment, the navigation apparatus comprises at least one of: a server, a navigation device of the vehicle, a driving recorder and a portable device. The portable device comprises a wearable device or a smart phone.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 302 causes the navigation apparatus 300 to perform the actions, e.g., of the procedure described earlier in conjunction with Fig. 1.

The computer program product may be configured as a computer program code structured in computer program modules. The computer program modules could essentially perform the actions of the flow illustrated in Fig. 1.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories.

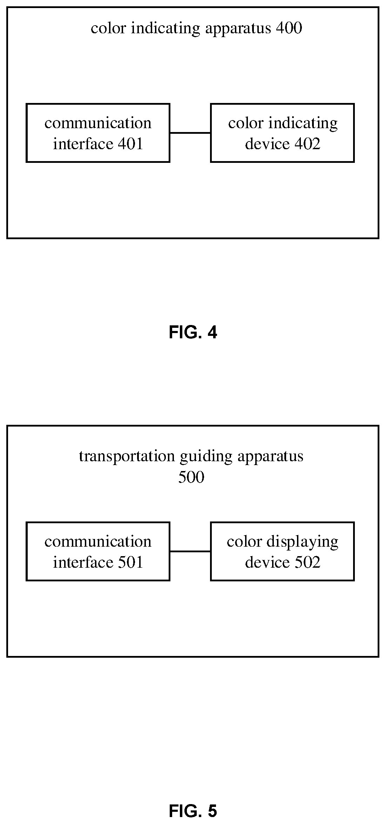

Fig. 4 is a block diagram of a color indicating apparatus on a vehicle, for indicating a color associated with the vehicle according to embodiments of the present disclosure.

The color indicating apparatus 400 may be mounted to, attached to, or integrated to the vehicle. The color indicating apparatus 400 may be located on, in or within the vehicle. The color indicating apparatus 400 may be a part of the navigation apparatus 300 in case that the navigation apparatus 300 is located in the vehicle. For example, the navigation apparatus 300 may be a navigation software/device and the color indicating apparatus 400 is part of it and can indicate the color associated with the vehicle.

The color indicating apparatus 400 includes a communication interface 401 is configured for receiving an indication of the color from a navigation apparatus; and a color indicating device 402 is configured for indicating the color in accordance with the indication.

In an embodiment, the color indicating device 400 comprises at least one of: bulb, Light Emitting Diode (LED) module, Liquid Crystal Display (LCD) module, Organic Light-Emitting Diode (OLED) module, and text displaying module with text indicating the color.

A color indicating device 402 is located within line of sight of a driver of the vehicle and indicates the color to the driver. For example, the color indicating device 402 is located on at least one of the windshield, rearview mirror, dash board, or steering wheel.

A color indicating device 402 is located on the rear end of the vehicle and indicates the color to another driver in another vehicle. For example, the color indicating device 402 is a taillight of the vehicle.

In an embodiment, the communication interface 401 is further configured for receiving a navigation information based on the route and position of the vehicle and the color indicating device 402 is further configured for displaying the navigation information in the color.

In an embodiment, the color indicating device 402 has a shape of at least one of: belt, stripe, arrow, rectangle, triangle, straight line, curved line, and dotted line.

In an embodiment, the communication interface is further configured for receiving a line type associated with the vehicle and the color indicating device is further configured for displaying the navigation information with the line type.

Fig. 5 is a block diagram of a transportation guiding apparatus, for guiding a vehicle according to embodiments of the present disclosure.

The transportation guiding apparatus 500 may include a communication interface 501 configured for receiving an instruction on color display for guiding the vehicle from a navigation apparatus; and a color displaying device 502 configured for displaying a color associated with the vehicle in accordance with the instruction.

In an embodiment, the communication interface 501 may be Narrow Band Internet of Things (NB-IoT) module or any other IoT module.

In an embodiment, the instruction on color display comprises an indication of the color and when the color should be displayed.

In an embodiment, the color displaying device 502 comprises at least one of: bulb, Light Emitting Diode (LED) module, Liquid Crystal Display (LCD) module and Organic Light-Emitting Diode (OLED) module.

In an embodiment, the color displaying device 502 has a shape of at least one of: belt, stripe, arrow, rectangle, triangle, straight line, curved line, and dotted line.

In an embodiment, the color displaying device 502 is integrated to, attached to, adhered to or mounted to a transportation facility.

In an embodiment, the transportation facility comprises at least one of: road sign, light barrier and traffic line.

In an embodiment, the transportation guiding apparatus 500 further comprises a power device for providing power to the transportation guiding apparatus. The power device may obtain power from sunlight or wind.

In an embodiment, the communication interface is further configured for receiving a line type associated with the vehicle and the color displaying device is further configured for displaying the color with the line type.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination.

It will be obvious to a person skilled in the art that, as the technology advances, the inventive concept can be implemented in various ways. The above described embodiments are given for describing rather than limiting the disclosure. The protection scope of the disclosure is defined by the accompanying claims.

## Claims

1. A navigation method performed by a navigation apparatus, for providing navigation to a vehicle, comprising:
locating a position of the vehicle;
determining a route for the vehicle based on the position and a destination of the vehicle;
determining a transportation guiding apparatus positioned along the route for guiding the vehicle based on the route and position of the vehicle; **characterized in that** the method comprises:
determining a color associated with the vehicle;
transmitting an indication of the color to a first color indicating apparatus on the vehicle and to a second color indicating apparatus; and
transmitting, an instruction on color display for guiding the vehicle, to the transportation guiding apparatus for displaying the color so as to guide the vehicle;
wherein the first color indicating apparatus comprises a first communication interface configured for receiving the indication of the color from the navigation apparatus and a first color indicating device configured for indicating the color in accordance with the indication;
wherein the first color indicating device is located within line of sight of a driver of the vehicle and indicates the color to the driver;
wherein the second color indicating apparatus comprises a second communication interface configured for receiving the indication of the color from the navigation apparatus and a second color indicating device configured for indicating the color in accordance with the indication;
wherein the second color indicating device is located on the rear end of the vehicle and indicates the color to another driver in another vehicle.

2. The method of claim 1, wherein the determining a transportation guiding apparatus for guiding the vehicle based on the route and position of the vehicle comprises:
selecting one or more transportation guiding apparatuses along the route and within a predetermined distance with respect to the position of the vehicle.

3. The method of claim 2, wherein the one or more transportation guiding apparatuses are integrated to, attached to, adhered to or mounted to one or more transportation facilities.

4. The method of claim 3, wherein the one or more transportation facilities are a sequence of transportation facilities.

5. The method of claim 3, wherein the one or more transportation facilities are one or more road signs or traffic lines.

6. The method of claim 1, wherein the color is determined by at least one of: randomly selection, sequence selection, user input and a color of a group of vehicles including the vehicle.

7. The method of claim 1, further comprising:
transmitting, a navigation information based on the route and position of the vehicle, to the color indicating apparatus on the vehicle.

8. The method of claim 7, further comprising:
determining a line type associated with the vehicle; and
transmitting the line type to the color indicating apparatus on the vehicle and the transportation guiding apparatus.

9. The method of claim 1, wherein the instruction on color display comprises an indication of the color and when the color should be displayed.

10. A navigation apparatus, for providing navigation to a vehicle, comprising:
a communication interface;
a processor; and
a memory coupled to the processor, said memory containing instructions executable by said processor, whereby the navigation apparatus is operative to perform a method according to any one of claims 1-9.

11. The navigation apparatus of claim 10, wherein the navigation apparatus comprises at least one of: a server, a navigation device of the vehicle, a driving recorder and a portable device.

12. The navigation apparatus of claim 11, wherein the portable device comprises a wearable device or a smart phone.

13. A system comprising:
the navigation apparatus according to any one of claims 10-12:
a first color indicating apparatus on the vehicle, for indicating a color associated with the vehicle, comprising:
a first communication interface configured for receiving an indication of the color from a navigation apparatus and
a first color indicating device configured for indicating the color in accordance with the indication;
wherein the first color indicating device is located within line of sight of a driver of the vehicle and indicates the color to the driver;
a second color indicating apparatus on the vehicle, for indicating the color associated with the vehicle, comprising a second communication interface configured for receiving an indication of the color from a navigation apparatus and a second color indicating device configured for indicating the color in accordance with the indication, wherein the second color indicating device is located on the rear end of the vehicle and indicates the color to another driver in another vehicle; and
a transportation guiding apparatus positioned along a route of the vehicle, for guiding the vehicle, comprising a communication interface configured for receiving an instruction on color display for guiding the vehicle from a navigation apparatus and a color displaying device configured for displaying a color associated with the vehicle in accordance with the instruction so as to guide the vehicle.

14. The system according to claim 13, wherein the second color indicating device is a taillight of the vehicle.

## Patentansprüche

1. Navigationsverfahren, das von einer Navigationsvorrichtung durchgeführt wird, zum Bereitstellen von Navigation für ein Fahrzeug, umfassend:
Lokalisieren einer Position des Fahrzeugs;
Bestimmen einer Route für das Fahrzeug basierend auf der Position und einem Ziel des Fahrzeugs;
Bestimmen einer Verkehrsleitvorrichtung, die entlang der Route positioniert ist, zum Leiten des Fahrzeugs basierend auf der Route und der Position des Fahrzeugs;
**dadurch gekennzeichnet, dass** das Verfahren Folgendes umfasst:
Bestimmen einer Farbe, die mit dem Fahrzeug assoziiert ist;
Senden einer Anzeige der Farbe an eine erste Farbanzeigevorrichtung auf dem Fahrzeug und an eine zweite Farbanzeigevorrichtung; und
Senden einer Anweisung hinsichtlich der Farbdarstellung zum Leiten des Fahrzeugs an die Verkehrsleiteinrichtung zum Darstellen der Farbe, um das Fahrzeug zu leiten;
wobei die erste Farbanzeigevorrichtung eine erste Kommunikationsschnittstelle, die zum Empfangen der Anzeige der Farbe von der Navigationsvorrichtung konfiguriert ist, und ein erstes Farbanzeigegerät umfasst, das zum Anzeigen der Farbe gemäß der Anzeige konfiguriert ist;
wobei sich das erste Farbanzeigegerät innerhalb der Sichtlinie eines Fahrers des Fahrzeugs befindet und dem Fahrer die Farbe anzeigt;
wobei die zweite Farbanzeigevorrichtung eine zweite Kommunikationsschnittstelle, die zum Empfangen der Anzeige der Farbe von der Navigationsvorrichtung konfiguriert ist, und ein zweites Farbanzeigegerät umfasst, das zum Anzeigen der Farbe gemäß der Anzeige konfiguriert ist;
wobei sich das zweite Farbanzeigegerät am hinteren Ende des Fahrzeugs befindet und die Farbe einem anderen Fahrer in einem anderen Fahrzeug anzeigt.

2. Verfahren nach Anspruch 1, wobei das Bestimmen einer Verkehrsleitvorrichtung zum Leiten des Fahrzeugs basierend auf der Route und der Position des Fahrzeugs Folgendes umfasst:
Auswählen einer oder mehrerer Verkehrsleitvorrichtungen entlang der Route und innerhalb eines vorbestimmten Abstands in Bezug auf die Position des Fahrzeugs.

3. Verfahren nach Anspruch 2, wobei die eine oder die mehreren Verkehrsleitvorrichtungen in eine oder mehrere Verkehrseinrichtungen integriert oder daran angeheftet oder montiert sind.

4. Verfahren nach Anspruch 3, wobei es sich bei der einen oder den mehreren Verkehrseinrichtungen um eine Sequenz von Verkehrseinrichtungen handelt.

5. Verfahren nach Anspruch 3, wobei die eine oder die mehreren Verkehrseinrichtungen ein oder mehrere Straßenschilder oder Fahrspurlinien sind.

6. Verfahren nach Anspruch 1, wobei die Farbe durch mindestens eines von Folgenden bestimmt wird: Auswahl nach dem Zufallsprinzip, Sequenzauswahl, Benutzereingabe und Farbe einer Gruppe von Fahrzeugen, die das Fahrzeug umfasst.

7. Verfahren nach Anspruch 1, ferner umfassend:
Senden einer Navigationsinformation basierend auf der Route und der Position des Fahrzeugs an die Farbanzeigevorrichtung auf dem Fahrzeug.

8. Verfahren nach Anspruch 7, ferner umfassend:
Bestimmen eines Linientyps, der mit dem Fahrzeug assoziiert ist; und
Senden des Linientyps an die Farbanzeigevorrichtung auf dem Fahrzeug und die Verkehrsleitvorrichtung.

9. Verfahren nach Anspruch 1, wobei die Anweisung hinsichtlich der Farbdarstellung eine Anzeige der Farbe und den Zeitpunkt umfasst, zu dem die Farbe dargestellt werden sollte.

10. Navigationsvorrichtung zum Bereitstellen von Navigation für ein Fahrzeug, umfassend:
eine Kommunikationsschnittstelle;
einen Prozessor; und
einen Speicher, der mit dem Prozessor gekoppelt ist, wobei der Speicher Anweisungen enthält, die vom Prozessor ausgeführt werden können, wodurch die Navigationsvorrichtung zum Durchführen eines Verfahrens nach einem der Ansprüche 1-9 ausgelegt ist.

11. Navigationsvorrichtung nach Anspruch 10, wobei die Navigationsvorrichtung mindestens eines von Folgenden umfasst: einen Server, ein Navigationsgerät des Fahrzeugs, einen Fahrtenschreiber und ein tragbares Gerät.

12. Navigationsvorrichtung nach Anspruch 11, wobei das tragbare Gerät ein am Körper tragbares Gerät oder ein Smartphone umfasst.

13. System, umfassend:
die Navigationsvorrichtung nach einem der Ansprüche 10-12;
eine erste Farbanzeigevorrichtung auf dem Fahrzeug zum Anzeigen einer mit dem Fahrzeug assoziierten Farbe, die Folgendes umfasst:
eine erste Kommunikationsschnittstelle, die zum Empfangen einer Anzeige der Farbe von einer Navigationsvorrichtung konfiguriert ist, und
ein erstes Farbanzeigegerät, das zum Anzeigen der Farbe gemäß der Anzeige konfiguriert ist;
wobei sich das erste Farbanzeigegerät innerhalb der Sichtlinie eines Fahrers des Fahrzeugs befindet und dem Fahrer die Farbe anzeigt;
eine zweite Farbanzeigevorrichtung auf dem Fahrzeug zum Anzeigen der mit dem Fahrzeug assoziierten Farbe, die eine zweite Kommunikationsschnittstelle, die zum Empfangen der Anzeige der Farbe von der Navigationsvorrichtung konfiguriert ist, und ein zweites Farbanzeigegerät umfasst, das zum Anzeigen der Farbe gemäß der Anzeige konfiguriert ist, wobei sich das zweite Farbanzeigegerät am hinteren Ende des Fahrzeugs befindet und die Farbe einem anderen Fahrer in einem anderen Fahrzeug anzeigt; und
eine entlang einer Route des Fahrzeugs positionierte Verkehrsleitvorrichtung zum Leiten des Fahrzeugs, die eine Kommunikationsschnittstelle, die zum Empfangen einer Anweisung hinsichtlich der Farbanzeige zum Leiten des Fahrzeugs konfiguriert ist, und ein Farbanzeigegerät umfasst, das dazu konfiguriert ist, eine mit dem Fahrzeug assoziierte Farbe gemäß der Anweisung anzuzeigen, um das Fahrzeug zu leiten.

14. System nach Anspruch 13, wobei das zweite Farbanzeigegerät eine Schlussleuchte des Fahrzeugs ist.

## Revendications

1. Procédé de navigation réalisé par un appareil de navigation, pour fournir une navigation à un véhicule, comprenant :
la localisation d'une position du véhicule ;
la détermination d'un itinéraire pour le véhicule sur la base de la position et d'une destination du véhicule ;
la détermination d'un appareil de guidage de transport positionné le long de l'itinéraire pour guider le véhicule sur la base de l'itinéraire et de la position du véhicule ;
**caractérisé en ce que** le procédé comprend :
la détermination d'une couleur associée au véhicule ;
la transmission d'une indication de la couleur à un premier appareil d'indication de couleur sur le véhicule et à un deuxième appareil d'indication de couleur ; et
la transmission d'une instruction, sur un dispositif d'affichage de couleur pour guider le véhicule, à l'appareil de guidage de transport pour afficher la couleur de manière à guider le véhicule ;
dans lequel le premier appareil d'indication de couleur comprend une première interface de communication configurée pour recevoir l'indication de la couleur depuis l'appareil de navigation et un premier dispositif d'indication de couleur configuré pour indiquer la couleur en fonction de l'indication ;
dans lequel le premier dispositif d'indication de couleur est situé dans une ligne de vue d'un conducteur du véhicule et indique la couleur au conducteur ;
dans lequel le deuxième appareil d'indication de couleur comprend une deuxième interface de communication configurée pour recevoir l'indication de la couleur depuis l'appareil de navigation et un deuxième dispositif d'indication de couleur configuré pour indiquer la couleur en fonction de l'indication ;
dans lequel le deuxième dispositif d'indication de couleur est situé à l'extrémité arrière du véhicule et indique la couleur à un autre conducteur dans un autre véhicule.

2. Procédé selon la revendication 1, dans lequel la détermination d'un appareil de guidage de transport pour guider le véhicule sur la base de l'itinéraire et de la position du véhicule comprend :
la sélection d'un ou plusieurs appareils de guidage de transport le long de l'itinéraire et à une distance prédéterminée par rapport à la position du véhicule.

3. Procédé selon la revendication 2, dans lequel les un ou plusieurs appareils de guidage de transport sont intégrés à, fixés à, collés à ou montés sur une ou plusieurs installations de transport.

4. Procédé selon la revendication 3, dans lequel les une ou plusieurs installations de transport sont une séquence d'installations de transport.

5. Procédé selon la revendication 3, dans lequel les une ou plusieurs installations de transport sont un ou plusieurs panneaux de signalisation ou lignes de circulation.

6. Procédé selon la revendication 1, dans lequel la couleur est déterminée par au moins l'une parmi : une sélection aléatoire, une sélection de séquence, une entrée d'utilisateur et une couleur d'un groupe de véhicules incluant le véhicule.

7. Procédé selon la revendication 1, comprenant en outre :
la transmission d'informations de navigation, sur la base de l'itinéraire et de la position du véhicule, à l'appareil d'indication de couleur sur le véhicule.

8. Procédé selon la revendication 7, comprenant en outre :
la détermination d'un type de ligne associé au véhicule ; et
la transmission du type de ligne à l'appareil d'indication de couleur sur le véhicule et à l'appareil de guidage de transport.

9. Procédé selon la revendication 1, dans lequel l'instruction sur le dispositif d'affichage de couleur comprend une indication de la couleur et le moment auquel la couleur doit être affichée.

10. Appareil de navigation pour fournir une navigation à un véhicule, comprenant :
une interface de communication ;
un processeur ; et
une mémoire couplée au processeur, ladite mémoire contenant des instructions exécutables par ledit processeur, selon lesquelles l'appareil de navigation est fonctionnel pour réaliser un procédé selon l'une quelconque des revendications 1 à 9.

11. Appareil de navigation selon la revendication 10, dans lequel l'appareil de navigation comprend au moins l'un parmi : un serveur, un dispositif de navigation du véhicule, un enregistreur de conduite et un dispositif portable.

12. Appareil de navigation selon la revendication 11, dans lequel le dispositif portable comprend un dispositif portatif ou un smartphone.

13. Système comprenant :
l'appareil de navigation selon l'une quelconque des revendications 10 à 12 ;
un premier appareil d'indication de couleur sur le véhicule, pour indiquer une couleur associée au véhicule, comprenant :
une première interface de configuration configurée pour recevoir une indication de la couleur depuis un appareil de navigation et
un premier dispositif d'indication de couleur configuré pour indiquer la couleur en fonction de l'indication ;
dans lequel le premier dispositif d'indication de couleur est situé dans une ligne de vue d'un conducteur du véhicule et indique la couleur au conducteur ;
un deuxième appareil d'indication de couleur sur le véhicule, pour indiquer la couleur associée au véhicule, comprenant une deuxième interface de communication configurée pour recevoir une indication de la couleur depuis un appareil de navigation et un deuxième dispositif d'indication de couleur configuré pour indiquer la couleur en fonction de l'indication, dans lequel le deuxième dispositif d'indication de couleur est situé à l'extrémité arrière du véhicule et indique la couleur à un autre conducteur dans un autre véhicule ; et
un appareil de guidage de transport positionné le long d'un itinéraire du véhicule, pour guider le véhicule, comprenant une interface de communication configurée pour recevoir une instruction, sur un dispositif d'affichage de couleur pour guider le véhicule, depuis un appareil de navigation et un dispositif d'affichage de couleur configuré pour afficher une couleur associée au véhicule en fonction de l'instruction de manière à guider le véhicule.

14. Système selon la revendication 13, dans lequel le deuxième dispositif d'indication de couleur est un feu arrière du véhicule.
